# EUROPÄISCHE PATENTSCHRIFT

(11) **EP 3 504 150 B1**
(45) Veröffentlichungstag und Bekanntmachung des Hinweises auf die Patenterteilung: **26.10.2022**
(21) Anmeldenummer: 17740639.4
(22) Anmeldetag: 29.06.2017
(51) Int. Cl.: B67C 3/00, B67C 3/22, G05B 19/418, G06Q 10/00, B67C 7/00, B65B 3/00, B65B 21/00, B65B 59/00, B65B 65/00, B65B 57/18, B65B 19/02

(54) **BEHÄLTERBEHANDLUNGSANLAGE UND VERFAHREN FÜR BEHÄLTERBEHANDLUNGSANLAGE MIT SIGNALEN FÜR GEPLANTE ZUSTÄNDE**
CONTAINER HANDLING PLANT AND METHOD FOR A CONTAINER HANDLING PLANT WITH SIGNALS FOR PLANNED STATES
INSTALLATION DE TRAITEMENT DE RÉCIPIENTS ET PROCÉDÉ CONCERNANT UNE INSTALLATION DE TRAITEMENT DE RÉCIPIENTS AU MOYEN DE SIGNAUX RELATIFS À DES ÉTATS PRÉVUS

(30) Priorität: 24.08.2016 DE 102016115694
(43) Veröffentlichungstag der Anmeldung: 03.07.2019
(73) Patentinhaber: Krones AG, 93073 Neutraubling (DE)
(72) Erfinder: KLEIN, Robert, 93073 Neutraubling (DE); HAHN, Wolfgang, 93073 Neutraubling (DE); PRONOLD, Timo, 93073 Neutraubling (DE); ZOELFL, Markus, 93073 Neutraubling (DE)
(74) Vertreter: Schuhbießer, Irmgard Gertrud
(86) Internationale Anmeldenummer: PCT/EP2017/066231
(87) Internationale Veröffentlichungsnummer: WO 2018/036692

(56) Entgegenhaltungen:
- WO-A1-2008/049518
- WO-A1-2012/016771
- DE-A1-102011 050 724

## Beschreibung

Die vorliegende Erfindung bezieht sich auf eine Behälterbehandlungsanlage und ein Verfahren für eine Behälterbehandlungsanlage mit Signalen, wie Audiosignalen und/oder optischen Signalen, für geplante Zustände.

Eine Behälterbehandlungsanlage wird beispielsweise in der Getränkeindustrie zur Herstellung und/oder Befüllung und/oder Verpackung von Behältern verwendet. Die Behälterbehandlungsanlage kann mindestens eine Behälterbehandlungsmaschine umfassen, wie beispielsweise eine Blasmaschine und/oder eine Reinigungsmaschine und/oder eine Füllmaschine und/oder eine Etikettiermaschine und/oder eine Verpackungsmaschine. Behälter sind insbesondere Dosen, Glasflaschen oder Kunststoffflaschen. Die Behälter werden mit einer Transporteinrichtung zwischen den einzelnen Maschinen der Behälterbehandlungsanlage transportiert.

WO 2012/016771 offenbart ein Verfahren und eine Vorrichtung zum Betreiben einer Anlage zum Behandeln von Behältnissen mit übergeordneter Parameteranwahl.

WO 2008/049518 A1 zeigt eine Bedienungshilfe für eine Vorrichtung zum Behandeln von Behältnissen.

Es ist möglich, dass die Behälterbehandlungsanlage zur Behandlung von verschiedenen Behältern, wie beispielsweise Behältern mit einem Fassungsvermögen von 0,33 oder 0,5 oder 1 Liter, usw., oder zum Einfüllen von verschiedenen Getränken in ein und dieselbe Behältersorte oder zum Verpacken der Behälter in ein Gebinde aus zwei, vier oder sechs, usw. Behältern und/oder mit verschiedenen Verpackungsmaterialien wie Folien, Karton etc. ausgelegt ist. Je nach Behälter, Getränk oder auch Gebinde ist an dem Behälter auch ein anderes Etikett bzw. eine andere Ausstattung anzubringen. Somit treten im Betrieb der Behälterbehandlungsanlage verschiedene Anlagenzustände auf, auf welche die Behälterbehandlungsanlage jeweils einzustellen bzw. von einem vorherigen Zustand umzurüsten ist.

In der Regel ist es vorteilhaft, wenn die Einstell- bzw. Umrüstzeiten für die Behälterbehandlungsanlage so kurz wie möglich gehalten werden können.

Es ist daher Aufgabe der vorliegenden Erfindung, eine Behälterbehandlungsanlage und ein Verfahren bereitzustellen, mit welchen die zuvor genannten Probleme gelöst werden können. Insbesondere sollen eine Behälterbehandlungsanlage und ein Verfahren für eine Behälterbehandlungsanlage bereitgestellt werden, bei welchen die Einstell- bzw. Umrüstzeiten für die Behälterbehandlungsanlage so kurz wie möglich gehalten werden.

Die Aufgabe wird durch eine Behälterbehandlungsanlage nach Anspruch 1 gelöst. Die Behälterbehandlungsanlage hat mindestens eine Behälterbehandlungsmaschine zum Behandeln von Behältern, wobei mindestens eine Behälterbehandlungsmaschine einen Sortenvorwahlspeicher aufweist, bei welchem verschiedene Sorten für eine von der Behälterbehandlungsmaschine durchzuführende Behandlung vorwählbar sind, mindestens eine Ausgabeeinrichtung, die an der mindestens einen Behälterbehandlungsmaschine angeordnet ist, zur Ausgabe eines Audiosignals und/oder eines optischen Signals, und einer Steuereinrichtung, die zur Steuerung der mindestens einen Ausgabeeinrichtung derart ausgestaltet ist, dass die Ausgabeeinrichtung ein vorbestimmtes Audiosignal aus Tonfolgen mit mindestens zwei unterschiedlichen Tönen akustisch und/oder ein optisches Signal optisch ausgibt, wenn an der Behälterbehandlungsmaschine aufgrund der im Sortenvorwahlspeicher vorgewählten Sorte ein Wechsel einer Sorte oder ein Nachfüllen für die vorgewählte Sorte nach Ablauf einer vorbestimmten Zeitdauer in der Zukunft bevorsteht.

Mit der Behälterbehandlungsanlage kann anhand der Audiosignale durch mindestens einen Bediener einfach und sicher festgestellt werden, dass nach Ablauf einer vorbestimmten, insbesondere prognostizierten, Zeitdauer oder Zeit ein geplanter Zustand ansteht. Ein derartiger geplanter Zustand kann insbesondere ein Umrüsten der Behälterbehandlungsanlage auf ein Behandeln von Behältern mit einem Fassungsvermögen von beispielsweise 1 Liter auf Behälter mit einem Fassungsvermögen von 0,33 Liter sein. Es sind jedoch beliebige andere geplante Zustände denkbar. Dadurch wird der mindestens eine Bediener rechtzeitig an den geplanten Zustand erinnert, so dass sich der mindestens eine Bediener frühzeitig auf den geplanten Zustand einstellen und die dafür zu erledigenden Aufgaben rechtzeitig vorbereiten kann. Wartezeiten durch verspätete Ausführung der durch den geplanten Zustand erforderlichen Tätigkeiten, beispielsweise ein verspäteter Beginn der Umstellung oder Umrüstung der Anlage auf ein anderes Produkt, können verhindert werden. Infolgedessen können die Einstell- bzw. Umrüstzeiten für die Behälterbehandlungsanlage so kurz wie möglich gehalten werden. Dadurch wird die Verfügbarkeit der Behälterbehandlungsanlage erhöht, wodurch die Kosten für die Behälterbehandlungsanlage verringert werden können.

Mit der Behälterbehandlungsanlage ist besonders einfach und sicher und damit sehr vorteilhaft eine Unterscheidung der Audiosignale für geplante Zustände von Audiosignalen für Störungen oder Gefahren möglich. Dasselbe gilt für die Unterscheidung von optischen Signalen für geplante Zustände von optischen Signalen für Störungen oder Gefahren.

Außerdem sind die Audiosignale und/oder optischen Signal universell und können unabhängig von den Sprachkenntnissen der Bediener der Anlage verstanden werden. Dies ist von großem Vorteil in der heutigen Zeit, in welcher oft Bediener mit verschiedenen Muttersprachen an einer Behälterbehandlungsanlage tätig sind.

Vorteilhafte weitere Ausgestaltungen der Behälterbehandlungsanlage sind in den abhängigen Ansprüchen angegeben.

Möglicherweise ist das vorbestimmte Audiosignal eine Melodie. Alternativ kann das vorbestimmte Audiosignal eine Melodie sein, die mit einer Sprachsequenz kombiniert ist. Hierbei kann die Sprachsequenz eine gesprochene Sprachsequenz sein. Zusätzlich oder alternativ kann das optische Signal ein Dauerlicht oder ein Blinken oder ein Ausschalten der Ausgabeeinrichtung sein.

Es ist auch möglich, dass das vorbestimmte Audiosignal und/oder das optische Signal für jeden geplanten Zustand eines Wechsels einer Sorte oder ein Nachfüllen oder ein Bedienereingriff/Rüstvorgang für die vorgewählte Sorte der Behälterbehandlungsanlage verschieden sind/ist. Zusätzlich oder alternativ kann die Ausgabeeinrichtung ausgestaltet sein, das vorbestimmte Audiosignal und/oder das optische Signal periodisch zu wiederholen, wobei die Ausgabe des vorbestimmten Audiosignals und/oder des optischen Signals einen Code umfasst, der die fortschreitende Zeit in Bezug auf den Wechsel einer Sorte oder ein Nachfüllen für die vorgewählte Sorte umfasst.

Bevorzugt ist jeder Behälterbehandlungsmaschine, die einen Sortenvorwahlspeicher aufweist, eine Ausgabeeinrichtung zugeordnet, wobei die Ausgabeeinrichtung einer Behälterbehandlungsmaschine unabhängig von einer Ausgabeeinrichtung einer weiteren Behälterbehandlungsmaschine betreibbar ist.

Gemäß einer Ausführungsvariante weist die Behälterbehandlungsanlage eine erste Behälterbehandlungsmaschine und eine weitere Behälterbehandlungsmaschine auf, die in Transportrichtung der Behälter der ersten Behälterbehandlungsmaschine nachgeschaltet ist, wobei die Steuereinrichtung zur Steuerung einer Ausgabeeinrichtung, die an der weiteren Behälterbehandlungsmaschine angeordnet ist, derart ausgestaltet ist, dass die Ausgabeeinrichtung das vorbestimmte Audiosignal und/oder das optische Signal ausgibt, wenn an der ersten Behälterbehandlungsmaschine aufgrund der im Sortenvorwahlspeicher vorgewählten Sorte ein Wechsel der Sorte oder ein Nachfüllen für die vorgewählte Sorte in der Zukunft nach Ablauf einer vorbestimmten Zeitdauer bevorsteht.

Es ist auch denkbar, dass die Behälterbehandlungsanlage zudem eine Erfassungseinrichtung aufweist, die zur Erfassung mindestens eines Ist-Zustands einer Betriebsgröße beim Betrieb der mindestens einen Behälterbehandlungsmaschine ausgestaltet und angeordnet ist, wobei der Ist-Zustand der Betriebsgröße ein Maß für eine Zeitdauer oder eine noch abzufüllende Restmenge ist, nach deren Ablauf ein Start oder das Ende eines vorbestimmten Betriebs der mindestens einen Behälterbehandlungsmaschine bevorsteht, wobei die Steuereinrichtung zur Steuerung der mindestens einen Ausgabeeinrichtung derart ausgestaltet ist, dass die Ausgabeeinrichtung ein Audiosignal aus Tonfolgen mit mindestens zwei unterschiedlichen Tönen und/oder das optische Signal ausgibt, wenn die Erfassungseinrichtung einen vorbestimmten Ist-Zustand des mindestens einen Ist-Zustands erfasst.

Hierbei kann der Start oder das Ende eines vorbestimmten Betriebs der mindestens einen Behälterbehandlungsmaschine der Start oder das Ende der Produktion mit der Behälterbehandlungsanlage sein. Alternativ kann der Start oder das Ende eines vorbestimmten Betriebs der mindestens einen Behälterbehandlungsmaschine der Start oder das Ende einer Umstellung der mindestens einen Behälterbehandlungsmaschine von der Produktion eines ersten Produkts auf ein zweites Produkt sein. Alternativ kann der Start oder das Ende eines vorbestimmten Betriebs der mindestens einen Behälterbehandlungsmaschine der Start oder das Ende eines Reinigungsprozesses mit der mindestens einen Behälterbehandlungsmaschine sein. Als noch eine weitere Alternative kann auch der Start eines Leerfahrprozesses, z.B. am Mixer zum Mixen eines Produkts, das Ende der Produktion und den Beginn der nächsten Produktion signalisieren.

In einer Ausführungsvariante kann die Behälterbehandlungsanlage zudem eine Transporteinrichtung zum Transport von Behältern zu der mindestens einen Behälterbehandlungsmaschine oder weg von der mindestens einen Behälterbehandlungsmaschine aufweisen. Zusätzlich oder alternativ kann die Behälterbehandlungsanlage in einer weiteren Ausführungsvariante zudem eine Transporteinrichtung zum Transport von Behältern von einer ersten Behälterbehandlungsmaschine zu einer dritten Behälterbehandlungsmaschine unter Umgehung einer zweiten Behälterbehandlungsmaschine aufweisen, die zwischen der ersten und dritten Behälterbehandlungsmaschine angeordnet ist, wenn eine für die Umgehung entsprechende Sorte im Sortenvorwahlspeicher der ersten Behälterbehandlungsmaschine vorgewählt ist. Zusätzlich oder alternativ kann die mindestens eine Behälterbehandlungsmaschine eine Blasmaschine und/oder eine Reinigungsmaschine und/oder eine Wärmebehandlungsmaschine und/oder eine Füllmaschine und/oder eine Ausstattungsmaschine, wie eine Etikettiermaschine und/oder Bedruckungsmaschine, und/oder eine Verpackungsmaschine und/oder eine Palettiermaschine aufweisen.

Die Aufgabe wird zudem durch ein Verfahren für eine Behälterbehandlungsanlage nach Anspruch 10 gelöst, die mindestens eine Behälterbehandlungsmaschine zum Behandeln von Behältern, mindestens eine Ausgabeeinrichtung, die an der mindestens einen Behälterbehandlungsmaschine angeordnet ist, und eine Steuereinrichtung aufweist, wobei die mindestens eine Behälterbehandlungsmaschine einen Sortenvorwahlspeicher aufweist, bei welchem verschiedene Sorten für eine von der Behälterbehandlungsmaschine durchzuführende Behandlung vorwählbar sind, und wobei das Verfahren die Schritte aufweist: Durchführen einer Behandlung von Behältern mit der mindestens einen Behälterbehandlungsmaschine, bei der aus verschiedenen Sorten des Sortenvorwahlspeichers für eine von der Behälterbehandlungsmaschine durchzuführende Behandlung eine Sorte vorgewählt ist, Steuern, mit einer Steuereinrichtung, der mindestens einen Ausgabeeinrichtung derart, dass die Ausgabeeinrichtung ein vorbestimmtes Audiosignal aus Tonfolgen mit mindestens zwei unterschiedlichen Tönen und/oder ein optisches Signal ausgibt, wenn an der Behälterbehandlungsmaschine aufgrund der im Sortenvorwahlspeicher vorgewählten Sorte ein Wechsel einer Sorte oder ein Nachfüllen für die vorgewählte Sorte nach Ablauf einer vorbestimmten Zeitdauer in der Zukunft bevorsteht, und akustisches Ausgeben, mit mindestens einer Ausgabeeinrichtung, des vorbestimmten Audiosignals und/oder optisches Ausgeben, mit mindestens einer Ausgabeeinrichtung, eines optischen Signals.

Das Verfahren erzielt dieselben Vorteile, wie sie zuvor in Bezug auf die Behälterbehandlungsanlage genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand eines Ausführungsbeispiels näher beschrieben. Es zeigen:
Fig. 1 ein schematisches Blockschaltbild einer Behälterbehandlungsanlage gemäß einem ersten Ausführungsbeispiel;
Fig. 2 ein Flussdiagramm eines Verfahrens für eine Behälterbehandlungsanlage gemäß dem ersten Ausführungsbeispiel; und
Fig. 3 ein schematisches Blockschaltbild einer Behälterbehandlungsanlage gemäß einem zweiten Ausführungsbeispiel; und
Fig. 4 ein schematisches Blockschaltbild einer Behälterbehandlungsanlage gemäß einem dritten Ausführungsbeispiel.

In den Figuren sind gleiche oder funktionsgleiche Elemente, sofern nichts anderes angegeben ist, mit denselben Bezugszeichen versehen.

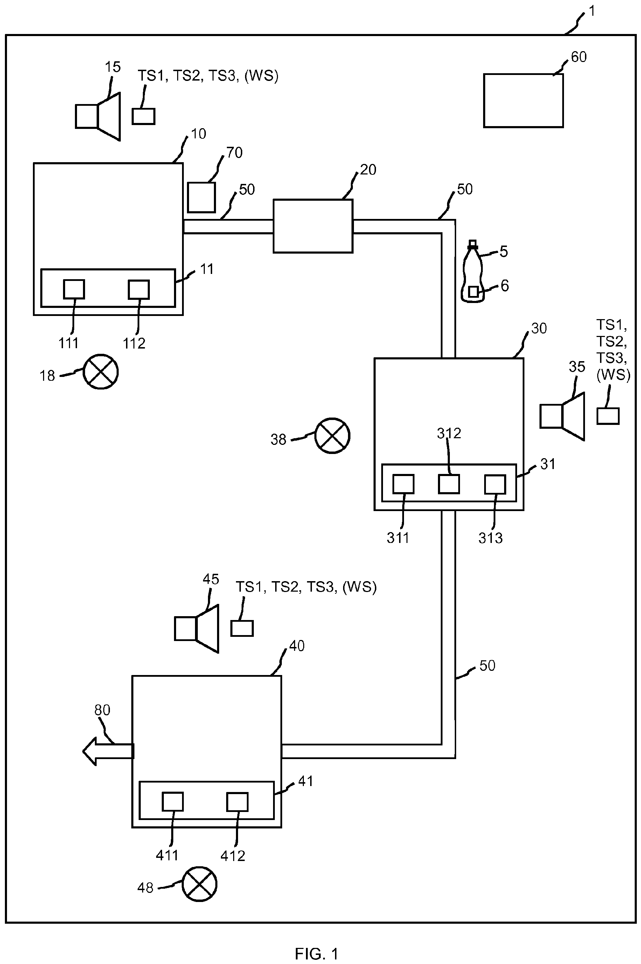

Fig. 1 zeigt sehr schematisch eine Behälterbehandlungsanlage 1 zur Behandlung von Behältern 5. Die Behälter 5 können entweder fertige Behälter, wie Glas- oder Kunststoffflaschen, Dosen, usw. oder auch Vorformlinge sein. In der Behälterbehandlungsanlage 1 in Fig. 1 können die Behälter 5 aus den Vorformlingen hergestellt sein. Die Vorformlinge sind aus Kunststoff, wie Polyäthylen-Terephthalat (PET), Polypropylen (PP) usw. gefertigt und sind ebenfalls Behälter, wenn auch noch unfertige bzw. von der Behälterbehandlungsanlage 1 unbehandelte Behälter. Die fertiggestellten Behälter 5 sind in Fig. 1 als Beispiel Flaschen, in die ein Produkt eingefüllt werden kann. Das Produkt kann insbesondere ein Getränk, ein Reinigungsmittel usw. sein. Die Behälter 5 können in der Behälterbehandlungsanlage 1 mit einem Etikett 6 versehen werden.

In Fig. 1 umfasst die Behälterbehandlungsanlage 1 eine erste Behälterbehandlungsmaschine 10, die einen Sortenvorwahlspeicher 11 aufweist und bei der eine erste Ausgabeeinrichtung 15 zur Ausgabe eines ersten bis dritten vorbestimmten Audiosignals TS1, TS2, TS3 und gegebenenfalls auch eines Warnsignals WS für einen ersten Bediener 18 angeordnet ist, eine zweite Behälterbehandlungsmaschine 20, eine dritte Behälterbehandlungsmaschine 30, die einen Sortenvorwahlspeicher 31 aufweist und bei der eine zweite Ausgabeeinrichtung 35 zur Ausgabe des ersten vorbestimmten Audiosignals TS1 für einen zweiten Bediener 38 angeordnet ist, eine vierte Behälterbehandlungsmaschine 40, die einen Sortenvorwahlspeicher 41 aufweist und bei der eine dritte Ausgabeeinrichtung 45 zur Ausgabe des ersten vorbestimmten Audiosignals TS1 für einen dritten Bediener 48 angeordnet ist, sowie Transporteinrichtungen 50, eine Steuereinrichtung 60 und eine Erfassungseinrichtung 70. Bei einer mit einem Pfeil 80 markierten Stelle der Behälterbehandlungsanlage 1 werden die Behälter 5 aus der Behälterbehandlungsanlage 1 ausgegeben.

Die erste Behälterbehandlungsmaschine 10 kann beispielsweise eine Füllmaschine zum Befüllen der Behälter 5 mit dem Produkt sein, die mit einer Etikettiermaschine zum Etikettieren der Behälter 5 kombiniert ist. Es ist auch möglich, dass die erste Behälterbehandlungsmaschine 10 auch eine Streckblasmaschine mit Heizeinrichtung zum Herstellen von Kunststoffbehältern aus Preformen als Behälter 5 aufweist. Es ist auch eine Kombination einer Streckblasmaschine mit einer Ausstattungsmaschine, wie einer Etikettiermaschine und/oder Bedruckungsmaschine, und einer Füllmaschine oder jegliche andere Ausführung eines Blocks möglich. Bevorzugt weist jede Einzelmaschine in einem solchen Block einen Sortenvorwahlspeicher auf. Der Block weist bevorzugt mindestens einen Tonsignalgeber oder Audiosignalgeber als Ausgabeeinrichtung 15 auf.

Die zweite Behälterbehandlungsmaschine 20 ist der ersten Behälterbehandlungsmaschine 10 in Transportrichtung der Behälter 5 nachgeschaltet. Die zweite Behälterbehandlungsmaschine 20 kann beispielsweise eine oder mehrere Produktbehandlungsmaschinen zum Pasteurisieren, Kühlen oder Aufwärmen der von der ersten Behälterbehandlungsmaschine 10 behandelten, beispielsweise befüllten, Behälter 5 umfassen.

Die dritte Behälterbehandlungsmaschine 30 ist der zweiten Behälterbehandlungsmaschine 20 in Transportrichtung der Behälter 5 nachgeschaltet. Die dritte Behälterbehandlungsmaschine 30 kann beispielsweise eine Verpackungsmaschine sein zum Verpacken der Behälter 5 in insbesondere Gebinde mit einer bestimmten Anzahl von Behältern 5, beispielsweise sechs Behältern 5.

Die vierte Behälterbehandlungsmaschine 40 ist der dritten Behälterbehandlungsmaschine 30 in Transportrichtung der Behälter 5 nachgeschaltet. Die vierte Behälterbehandlungsmaschine 40 kann beispielsweise eine Palettiermaschine zum Verpacken der Gebinde auf Paletten sein.

In Fig. 1 haben als ein Beispiel die erste, dritte und vierte Behälterbehandlungsmaschine 10, 30, 40 einen Sortenvorwahlspeicher 11, 31, 41, bei welchem verschiedene Sorten für eine von der zugehörigen Behälterbehandlungsmaschine 10, 30, 40 durchzuführende Behandlung vorwählbar sind. Selbstverständlich kann auch die zweite Behälterbehandlungsmaschine 10, 30, 40 einen Sortenvorwahlspeicher aufweisen. In dem Sortenvorwahlspeicher 11 sind mindestens zwei, bevorzugt mehrere verschiedene Sorten 111, 112 vorwählbar, wie eine Flasche mit einem Fassungsvermögen von 0,5 L oder eine Flasche mit einem Fassungsvermögen von 1,0 L, oder 1,5 I usw. und/oder das in die Behälter 5 einzufüllende Produkt, wobei hier jeweils auch die Etiketten, insbesondere Rundumetikett oder Brust- und Bauchetikett, oder nur Bauchetikett, oder die Beschriftung oder Bedruckung der Etiketten unterschiedlich sind. In dem Sortenvorwahlspeicher 31 sind drei verschiedene Sorten 311, 312, 313 vorwählbar, wie ein Gebinde mit sechs Flaschen, ein Gebinde mit zwei Flaschen, eine Spezialschutzfolie für das Gebinde. In dem Sortenvorwahlspeicher 31 sind zwei verschiedene Sorten 411, 412 vorwählbar, wie eine EURO-Palette oder eine Nicht-Euro-Palette.

Die Transporteinrichtungen 50 transportieren die Behälter 5 zwischen den einzelnen Behälterbehandlungsmaschinen 10, 20, 30, 40 von der ersten Behälterbehandlungsmaschine 10 zur zweiten Behälterbehandlungsmaschine 20 usw., so dass die Behälter 5 in Richtung des Pfeils 80 aus der Behälterbehandlungsanlage 1 ausgegeben werden.

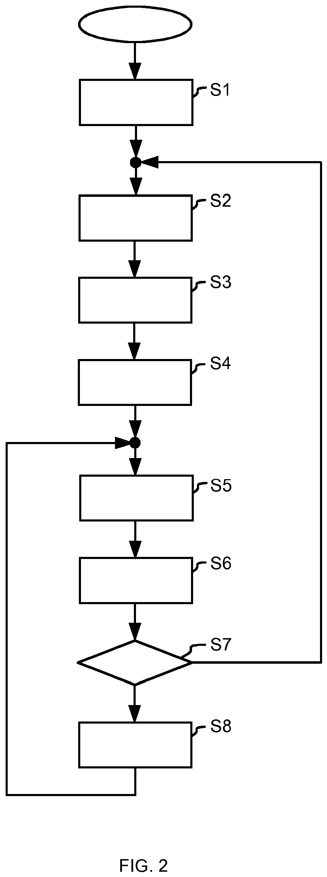

Die Steuereinrichtung 60 steuert die erste bis vierte Behälterbehandlungsmaschine 10, 20, 30, 40 sowie die Transporteinrichtungen 50. Zudem steuert die Steuereinrichtung 60 die Ausgabeeinrichtungen 15, 35, 45 gemeinsam oder unabhängig voneinander an. Dies ist in Fig. 2 mit Hilfe eines Flussdiagramms eines Verfahrens schematisch veranschaulicht.

Das Verfahren gemäß Fig. 2 kann durchgeführt werden, wenn die Behälterbehandlungsanlage 1 oder zumindest mindestens eine der Behälterbehandlungsmaschinen 10, 30, 40 eingeschaltet ist. Hierbei können die nachfolgend beschriebenen Schritte S1 bis S8 von der ersten Behälterbehandlungsmaschine 10 durchgeführt werden. Im Unterschied dazu können von der dritten und/oder vierten Behälterbehandlungsmaschine 30, 40 auch nur die Schritte S1 bis S4 vollständig durchgeführt werden. Bei Bedarf können von der dritten und/oder vierten Behälterbehandlungsmaschine 30, 40 auch die Schritte S5 und S6 ohne Ausgabe der vorbestimmten Audiosignale TS2 und TS3 ausgeführt werden.

Gemäß Fig. 2 wird nach dem Beginn des Verfahrens bei einem Schritt S1 zumindest eine der Sorten 111, 112, 311, 312, 313, 411, 412 für die jeweilige Behälterbehandlungsmaschine 10, 30, 40 vorgewählt. Zudem wird die zweite Behälterbehandlungsmaschine 20 eingeschaltet und von mindestens einem der jeweiligen Bediener 18, 38, 48, gegebenenfalls unter Führung durch beispielsweise optische oder auch akustische Ausgaben der Steuereinrichtung 60, eingerichtet. Danach geht der Fluss zu einem Schritt S2 weiter.

Bei dem Schritt S2 wird mit der Behälterbehandlungsanlage 1 produziert. Somit wird mit der Behälterbehandlungsanlage 1 eine Behandlung von Behältern 5 durchgeführt, wobei die Behandlung mit mindestens einer der Behälterbehandlungsmaschinen 10, 30, 40 durchgeführt wird. Hierbei wird die Behälterbehandlungsanlage 1 von der Steuereinrichtung 60 gesteuert. Danach geht der Fluss zu einem Schritt S3 weiter.

Bei dem Schritt S3 steuert die Steuereinrichtung 60 bei laufender Produktion mindestens eine der Ausgabeeinrichtungen 15, 35, 45 an, nachdem beispielsweise mit Hilfe der Erfassungseinrichtung 70 festgestellt wurde, dass in Kürze ein Wechsel der vorgewählten Sorte 111, 112, 311, 312, 313, 411, 412 oder ein Nachfüllen für die vorgewählte Sorte 111, 112, 311, 312, 313, 411, 412 bevorsteht. In Kürze umfasst hierbei, dass der Wechsel oder das Nachfüllen in der Zukunft, beispielsweise in einer vorbestimmten Zeitdauer von insbesondere ca. 5 Minuten oder 8 Minuten, usw., bevorsteht. Die vorbestimmte Zeitdauer muss zuvor prognostiziert oder abgeschätzt oder gestoppt oder berechnet werden, so dass die vorbestimmte Zeitdauer auch insbesondere eine prognostizierte Zeitdauer ist. Die Steuereinrichtung 60 steuert hierbei mindestens eine der Ausgabeeinrichtungen 15, 35, 45 derart an, dass die angesteuerte(n) Ausgabeeinrichtung(en) 15, 35, 45 ein erstes vorbestimmtes Audiosignal TS1 aus Tonfolgen mit mindestens zwei unterschiedlichen Tönen akustisch ausgibt. Demzufolge gibt die entsprechend angesteuerte mindestens eine Ausgabeeinrichtung 15, 35, 45 das erste vorbestimmte Audiosignal TS1 akustisch aus. Das erste vorbestimmte Audiosignal TS1 kann eine Melodie sein. Zusätzlich dazu kann die Melodie des ersten vorbestimmten Audiosignals TS1 auch mit einer Sprachsequenz kombiniert sein. Hierbei kann die Sprachsequenz auch eine gesprochene Sprachsequenz sein. Dadurch kann der jeweilige Bediener 18, 38, 48 das erste vorbestimmte Audiosignal TS1 einfach und sicher von einem Störsignal oder Warnsignal unterscheiden, das ein Summton oder ein Hupton ist. Das erste vorbestimmte Audiosignal TS1 signalisiert dem Bediener 18, 38, 48, dass er sich für das Rüsten oder Umrüsten der Sorte 111, 112, 311, 312, 313, 411, 412 vorbereiten soll. Danach geht der Fluss zu einem Schritt S4 weiter.

Bei dem Schritt S4 wartet die Steuereinrichtung 60, bis die vorbestimmte Zeitdauer abgelaufen oder ein geplantes Ereignis eingetreten ist, wie später in Bezug auf eine Modifikation des Ausführungsbeispiels beschrieben. Ist die vorbestimmte Zeitdauer abgelaufen, geht der Fluss zu einem Schritt S5 weiter.

Bei dem Schritt S5 steuert die Steuereinrichtung 60 die Behälterbehandlungsanlage 1 derart an, dass die Produktion beendet wird und die Umrüstung der Behälterbehandlungsanlage 1 beginnt. Hierbei kann der Bediener von der Steuereinrichtung 60 durch beispielsweise optische und/oder akustische Ausgaben durch die vorzunehmenden Schritte für die Umrüstung geleitet werden. Der Sortenvorwahlspeicher 11, 31, 41 kann jedoch nicht nur von einem Bediener 18, 38, 48 sondern auch zumindest teilweise von einem übergeordneten System (Line Management System) befüllt oder gewechselt werden. Außerdem steuert die Steuereinrichtung 60 auch die mindestens eine der Ausgabeeinrichtungen 15, 35, 45 derart an, dass die angesteuerte(n) Ausgabeeinrichtung(en) 15, 35, 45 ein zweites vorbestimmtes Audiosignal TS2 aus Tonfolgen mit mindestens zwei unterschiedlichen Tönen akustisch ausgibt. Demzufolge gibt die entsprechend angesteuerte mindestens eine Ausgabeeinrichtung 15, 35, 45 das zweite vorbestimmte Audiosignal TS2 akustisch aus. Das zweite vorbestimmte Audiosignal TS2 unterscheidet sich bevorzugt, insbesondere in der Tonfolge, von dem ersten vorbestimmten Audiosignal TS1. Dadurch kann der mindestens eine Bediener 18, 38, 48 der Behälterbehandlungsanlage 1 erkennen, in welchem Zustand sich die Behälterbehandlungsanlage 1 derzeit befindet. Das zweite vorbestimmte Audiosignal TS2 signalisiert beispielsweise dem Bediener 18 über die Ausgabeeinrichtung 15, dass der Bediener 18 unverzüglich mit dem Rüsten der Behälterbehandlungsmaschine 10 beginnen soll. Außerdem ist das zweite vorbestimmte Audiosignal TS2 ein Hinweis für den Bediener 38 der nächsten Behälterbehandlungsmaschine 20 oder 30, wie beispielsweise der Verpackungsmaschine, die in der Nähe ist, dass jetzt bald die letzten Behälter 5 an der Verpackungsmaschine, der Behälterbehandlungsmaschine 30, ankommen. Daher kann der Bediener 38 die Behälterbehandlungsmaschine 30 leerfahren (externes Rüsten) und anschließend rüsten (internes Rüsten), beispielsweise auf die nächste Sorte 111, 112, 311, 312, 313, 411, 412 umrüsten. Jedoch kann mit der Ausgabeeinrichtung 35 an der Behälterbehandlungsmaschine 30, wie beispielsweise der Verpackungsmaschine, das erste vorbestimmte Audiosignal TS1 ausgegeben werden, wenn der Bediener 38 mittels eines manuellen Vorgangs die Behälterbehandlungsmaschine 30 leerfahren kann. Dadurch wird dem Bediener 38 zusätzlich signalisiert, sich auf das Rüsten der Behälterbehandlungsmaschine 30 vorzubereiten. Ist die Umrüstung der Behälterbehandlungsanlage 1 beendet, geht der Fluss zu einem Schritt S6 weiter.

Bei dem Schritt S6 steuert die Steuereinrichtung 60 die Behälterbehandlungsanlage 1 derart an, dass die Produktion nach der Umrüstung der Behälterbehandlungsanlage 1 wieder aufgenommen wird. Hierbei steuert die Steuereinrichtung 60 auch die mindestens eine der Ausgabeeinrichtungen 15, 35, 45 derart an, dass die angesteuerte(n) Ausgabeeinrichtung(en) 15, 35, 45 ein drittes vorbestimmtes Audiosignal TS3 aus Tonfolgen mit mindestens zwei unterschiedlichen Tönen akustisch ausgibt. Demzufolge gibt die entsprechend angesteuerte mindestens eine Ausgabeeinrichtung 15, 35, 45 das dritte vorbestimmte Audiosignal TS3 akustisch aus. Auch das dritte vorbestimmte Audiosignal TS3 unterscheidet sich bevorzugt, insbesondere in der Tonfolge, von dem ersten und zweiten vorbestimmten Audiosignal TS1, TS2. Dadurch kann der jeweilige Bediener 18, 38, 48 der Behälterbehandlungsanlage 1 erkennen, in welchem Zustand sich die Behälterbehandlungsanlage 1 derzeit befindet. Danach geht der Fluss zu einem Schritt S7 weiter.

Bei dem Schritt S7 prüft die Steuereinrichtung 60, ob eine Testfahrt mindestens einer umgerüsteten Behälterbehandlungsmaschine 10, 30, 40 erfolgreich war oder nicht. War die Testfahrt erfolgreich, geht der Fluss zu dem Schritt S2 zurück. War die Testfahrt nicht erfolgreich, geht der Fluss zu einem Schritt S8 weiter.

Bei dem Schritt S8, also wenn die Testfahrt nicht erfolgreich war, ist ein ungeplanter Zustand vorhanden. Dies kann mit einem Warnsignal WS signalisiert werden, das sich von den zuvor beschriebenen vorbestimmten Audiosignalen TS1, TS2, TS3 für die geplanten Zustände unterscheidet. Somit steuert die Steuereinrichtung 60 die mindestens eine der Ausgabeeinrichtungen 15, 35, 45 derart an, dass die angesteuerte(n) Ausgabeeinrichtung(en) 15, 35, 45 das Warnsignal WS akustisch ausgibt. Demzufolge gibt die entsprechend angesteuerte mindestens eine Ausgabeeinrichtung 15, 35, 45 das Warnsignal WS akustisch aus. Das Warnsignal WS ist beispielsweise ein Hupton, oder ein Summton, wie zuvor beschrieben. Somit unterscheidet sich das Warnsignal WS von den zuvor beschriebenen vorbestimmten Audiosignalen TS1, TS2, TS3 dahingehend, dass es ein übliches Hup- oder Störsignal- also kein Audiosignal wie beschrieben ist. Dadurch können die Bediener 18, 38, 48 der Behälterbehandlungsanlage 1 erkennen, in welchem Zustand sich die Behälterbehandlungsanlage 1 derzeit befindet. Danach geht der Fluss zu dem Schritt S5 zurück.

Das Verfahren ist beendet, wenn die Behälterbehandlungsanlage 1 ausgeschaltet wird oder keine Umrüstung oder kein Nachfüllen der vorgewählten Sorte 111, 112, 311, 312, 313, 411, 412 mehr vorgenommen wird.

Die Audiosignale TS1, TS2, TS3 wirken also über die jeweilige Behälterbehandlungsmaschine 10, 20, 30, 40 hinaus bzw. signalisieren die geplanten Zustände auch für andere, nachfolgende Behälterbehandlungsmaschinen 10, 20, 30, 40.

Je nach Konstellation der Anlage 1, wie beteiligte Maschinen 10, 20, 30, 40, räumliche Trennung der Maschinen 10, 20, 30, 40 oder der Art der Maschine 10, 20, 30, 40, können alle vorbestimmten Audiosignale TS1 bis TS3 oder auch nur ein Teil der vorbestimmten Audiosignale TS1 bis TS3 oder auch nur teilweise an den Behälterbehandlungsmaschine 10, 20, 30, 40 ausgegeben werden.

Beispielsweise kann eine Anlage 1 aufgebaut sein mit einem Block (Behälterbehandlungsmaschine 10), der eine Blasmaschine, eine Etikettiermaschine und eine Füllmaschine aufweist, sowie danach über Transporteure verbunden ist mit einer Verpackungsmaschine (Behälterbehandlungsmaschine 20) und danach wiederum über Transporteure verbunden ist mit einer Palettiermaschine (Behälterbehandlungsmaschine 30) etc. Bei diesem Beispiel kann es an der Palettiermaschine (Behälterbehandlungsmaschine 30) wichtig sein zu wissen, ob der Block (Behälterbehandlungsmaschine 10) die Produktion beendet und mit dem Rüsten begonnen wurde. Daher kann das vorbestimmte Audiosignal TS2 vom Block (Behälterbehandlungsmaschine 10) dann an der Palettiermaschine (Behälterbehandlungsmaschine 30) "gespiegelt"- also ebenfalls zeitgleich ausgegeben werden. Dies ist vorteilhaft, wenn die Palettiermaschine (Behälterbehandlungsmaschine 30) weit entfernt ist und das vorbestimmte Audiosignal TS2 vom Block (Behälterbehandlungsmaschine 10) an der Palettiermaschine (Behälterbehandlungsmaschine 30) nicht zu hören ist. Dadurch hat der Bediener entsprechend mehr Zeit, das Rüsten/die Umstellung vorzubereiten. In diesem Fall oder auch, wenn die beiden Maschinen 10, 30 nah beieinander stehen, kann es gegebenenfalls auch vorteilhaft sein, wenn sich beispielsweise das vorbestimmte Audiosignal TS1 für die Behälterbehandlungsmaschine 10 von dem vorbestimmten Audiosignal TS1 für die Behälterbehandlungsmaschine 30 unterscheidet.

Selbstverständlich sind auch andere Kombinationen/Abläufe denkbar.

Somit ist bei dem zuvor beschriebenen Verfahren das vorbestimmte Audiosignal TS1, TS2, TS3 für jeden geplanten Zustand eines Wechsels einer Sorte 111, 112, 311, 312, 313, 411, 412 oder eines Nachfüllens für eine Sorte 111, 112, 311, 312, 313, 411, 412 der Behälterbehandlungsanlage 1 bevorzugt verschieden von den anderen vorbestimmten Audiosignalen TS1, TS2, TS3.

Außerdem kann die Steuereinrichtung 60 beispielsweise die zweite Ausgabeeinrichtung 35 abhängig von einer im Sortenvorwahlspeicher 11 vorgewählten Sorte 111, 112 ansteuern. Demzufolge kann die Steuereinrichtung die zweite Ausgabeeinrichtung 35 ansteuern, wenn an der ersten Behälterbehandlungsmaschine 10 ein Wechsel der Sorte 111, 112 oder das Nachfüllen für die vorgewählte Sorte 111, 112 in der Zukunft, beispielsweise nach 5 Minuten, bevorsteht.

In einer ersten Modifikation des zuvor genannten Verfahrens kann mindestens eine der Ausgabeeinrichtungen 15, 35, 45 von der Steuereinrichtung 60 nur zur Ausgabe des zweiten vorbestimmten Signals TS2 angesteuert werden.

In einer zweiten Modifikation des zuvor genannten Verfahrens kann mindestens eine der Ausgabeeinrichtungen 15, 35, 45 ausgestaltet sein, das vorbestimmte Audiosignal TS1, TS2, TS3 periodisch zu wiederholen. Hierbei umfasst die Ausgabe des vorbestimmten Audiosignals TS1, TS2, TS3 einen Code, der die fortschreitende Zeit in Bezug auf den Wechsel einer Sorte 111, 112, 311, 312, 313, 411, 412 oder das Nachfüllen für eine Sorte 111, 112, 311, 312, 313, 411, 412 umfasst. Dies kann beispielsweise derart ausgeführt werden, dass das vorbestimmte Audiosignal TS1, TS2, TS3 nach einer Viertelstunde einmal ausgegeben wird, nach einer halben Stunde zweimal hintereinander ausgegeben wird, nach einer Dreiviertelstunde dreimal hintereinander ausgegeben wird, und nach einer Stunde viermal hintereinander ausgegeben wird usw.. Es ist auch möglich, dass die Ausgabe des vorbestimmten Audiosignals TS1, TS2, TS3 in den genannten Abständen jeweils merklich schneller ausgegeben wird. Es ist auch möglich, dass die Ausgabe des vorbestimmten Audiosignals TS1, TS2, TS3 zusätzlich beispielsweise einen bis vier Gongschläge umfasst. Bevorzugt kann das Audiosignal TS1 mit einem Gongschlag, das Audiosignal TS2 mit 2 Gongschlägen usw. kodiert sein. Das dient als zusätzliches Unterscheidungsmerkmal zwecks Zuordnung der Signale.

In einer dritten Modifikation des zuvor genannten Verfahrens kann die Erfassungseinrichtung 70 bei dem zuvor beschriebenen Schritt S2 mindestens einen Ist-Zustand einer Betriebsgröße beim Betrieb der mindestens einen Behälterbehandlungsmaschine 10, 20, 30, 40 erfassen. Eine solche Betriebsgröße kann insbesondere die Restmenge oder Minimalmenge eines Produkts in einem Füller oder Mixer für das zu mischende Produkt des Füllers sein, das in die Behälter 5 zu Füllen ist, oder die Restmenge von Etiketten auf einer Etikettenrolle, usw. Hierbei ist der Ist-Zustand der Betriebsgröße ein Maß für eine Zeitdauer, nach deren Ablauf ein Start oder das Ende eines vorbestimmten Betriebs der mindestens einen Behälterbehandlungsmaschine bevorsteht. In diesem Fall kann die Steuereinrichtung 60 bei dem Schritt S3 die mindestens eine Ausgabeeinrichtung 15, 35, 45 derart ansteuern, dass die Ausgabeeinrichtung 15, 35, 45 das erste vorbestimmte Audiosignal TS1 ausgibt, wenn die Erfassungseinrichtung einen vorbestimmten Ist-Zustand des mindestens einen Ist-Zustands erfasst.

Hierbei wird unter dem Start oder dem Ende eines vorbestimmten Betriebs der mindestens einen Behälterbehandlungsmaschine 10, 20, 30, 40 der Start oder das Ende der Produktion mit der Behälterbehandlungsanlage 1 verstanden. Alternativ wird unter dem Start oder dem Ende eines vorbestimmten Betriebs der mindestens einen Behälterbehandlungsmaschine 10, 20, 30, 40 der Start oder das Ende einer Umstellung der mindestens einen Behälterbehandlungsmaschine 10, 20, 30, 40 von der Produktion eines ersten Produkts auf ein zweites Produkt verstanden. Alternativ wird unter dem Start oder dem Ende eines vorbestimmten Betriebs der mindestens einen Behälterbehandlungsmaschine 10, 20, 30, 40 der Start oder das Ende eines Reinigungsprozesses mit der mindestens einen Behälterbehandlungsmaschine 10, 20, 30, 40 verstanden.

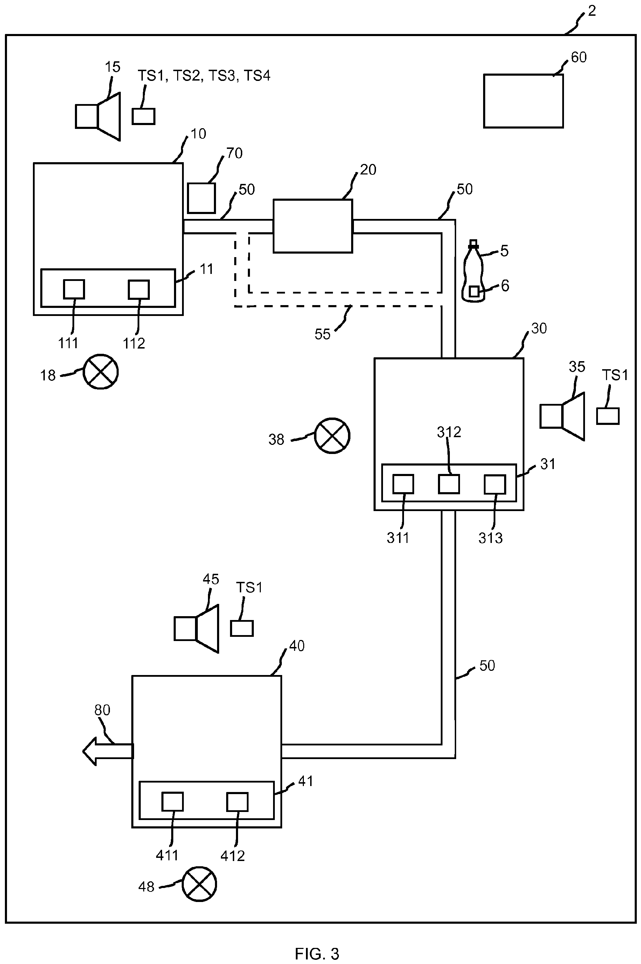

Fig. 3 zeigt eine Behälterbehandlungsanlage 2 gemäß einem zweiten Ausführungsbeispiel. Die Behälterbehandlungsanlage 2 gemäß dem zweiten Ausführungsbeispiel ist in weiten Teilen ausgeführt wie die Behälterbehandlungsanlage 1 gemäß dem ersten Ausführungsbeispiel. Daher werden nachfolgend nur die Unterschiede zwischen den beiden Ausführungsbeispielen beschrieben.

Im Unterschied zum ersten Ausführungsbeispiel hat die Behälterbehandlungsanlage 2 bei dem vorliegenden Ausführungsbeispiel eine Transporteinrichtung 55, die zur Umgehung der zweiten Behälterbehandlungsmaschine 20 angeordnet ist. Die Transporteinrichtung 55 kann Verwendung finden, wenn eine für die Umgehung entsprechende Sorte 111, im Sortenvorwahlspeicher 11 der ersten Behälterbehandlungsmaschine 10 vorgewählt ist. Nach dem Abfüllen von Getränken ist eine solche Umgehung beispielsweise denkbar, wenn anstelle eines zu pasteurisierenden Getränks in die Behälter 5 ein nicht zu pasteurisierendes Getränk abgefüllt wird. In einem solchen Fall ist eine Pasteurisation des Behälters 5 mit einem Pasteur nach dem Füllen des Behälters nicht vorgesehen. Genauso kann es erforderlich sein, eine abgefüllte Flasche in einem Wärmer zu erwärmen, rückzukühlen oder auf eine sonstige Art zu behandeln oder auch - durch eine Umgehung der Behälterbehandlungsmaschine 20 - nicht zu behandeln.

Auf diese Weise kann die Behandlung der Behälterbehandlungsanlage 2 vorteilhaft an die Sorte 111, 112 angepasst werden, die in dem Sortenvorwahlspeicher 11 der ersten Behälterbehandlungsmaschine 10 vorgewählt ist.

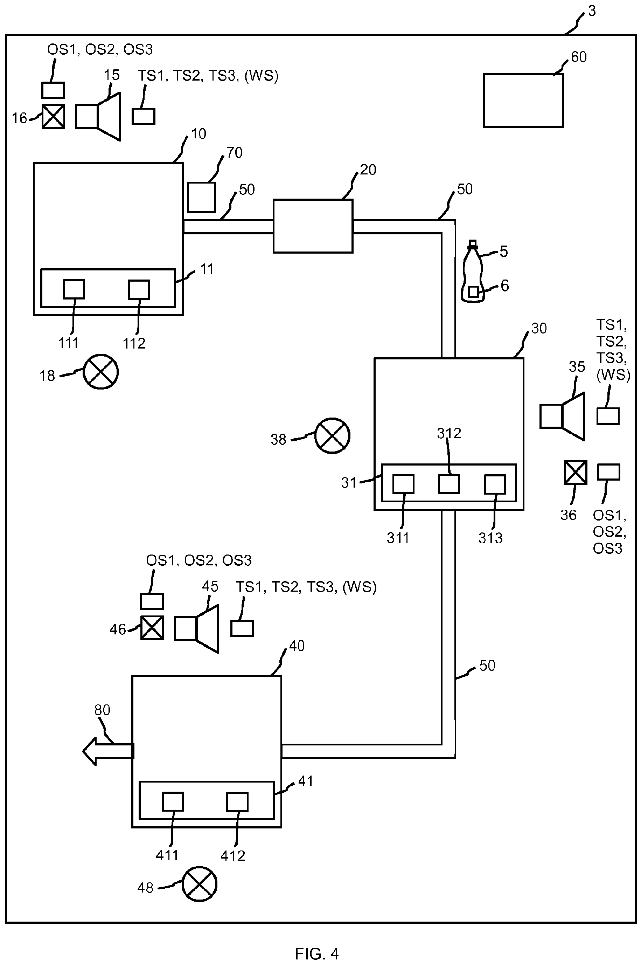

Fig. 4 zeigt eine Behälterbehandlungsanlage 3 gemäß einem dritten Ausführungsbeispiel. Die Behälterbehandlungsanlage 2 gemäß dem dritten Ausführungsbeispiel ist in weiten Teilen ausgeführt wie die Behälterbehandlungsanlage 1 gemäß dem ersten Ausführungsbeispiel. Daher werden nachfolgend nur die Unterschiede zwischen den beiden Ausführungsbeispielen beschrieben.

Im Unterschied zum ersten Ausführungsbeispiel hat die Behälterbehandlungsanlage 3 bei dem vorliegenden Ausführungsbeispiel alternativ oder zusätzlich eine erste bis dritte optische Ausgabeeinrichtung 16, 36, 46, die jeweils den einzelnen Behälterbehandlungsmaschinen 10, 30, 40 zugeordnet sind, wie in Fig. 4 dargestellt. Jede der ersten bis dritten optischen Ausgabeeinrichtungen 16, 36, 46 ist derart ausgestaltet, dass sie je nach Bedarf die vorbestimmten optischen Signale OS1, OS2, OS3 ausgeben kann.

Außerdem ist die Behälterbehandlungsanlage 3 bei dem vorliegenden Ausführungsbeispiel vorzugsweise eine Einweganlage. Eine solche Anlage produziert Behälter 5, die nach deren Entleerung des darin eingefüllten Produkts nicht mehr für ein Befüllen mit einem neuen Produkt wiederverwendet werden.

Jede der ersten bis dritten optischen Ausgabeeinrichtungen 16, 36, 46 kann, als sehr kostengünstige Variante, beispielsweise als Meldeleuchte ausgestaltet sein. Insbesondere kann die Meldeleuchte eine Farbe haben, wie Türkis, Pink, usw., die sich von den Farben von Warnleuchten unterscheidet, die als Farbe in der Regel Rot oder Grün oder Gelb oder Blau haben. Es ist jedoch auch möglich, dass zumindest eine der ersten bis dritten optischen Ausgabeeinrichtungen 16, 36, 46, als meist kostspieligere Variante, ein Bildschirm ist. Die zumindest eine erste bis dritte optische Ausgabeeinrichtung 16, 36, 46 kann auch in einen Bildschirm integriert sein.

Vorzugsweise werden die vorbestimmten optischen Signale OS1, OS2, OS3 parallel zu den oder auch anstelle der vorbestimmten Audiosignalen TS1, TS2, TS3 ausgegeben, wie nachfolgend beschrieben.

Das erste vorbestimmte optische Signal OS1 gibt bei dem zuvor beschriebenen Schritt S2 an, dass eine durchgehende Produktion an der zugehörigen Behälterbehandlungsmaschine 10, 30, 40 ansteht. In diesem Fall ist kein Wechsel einer Sorte 111, 112, 311, 312, 313, 411, 412 oder das Nachfüllen oder ein Bedienereingriff/Rüstvorgang für eine Sorte 111, 112, 311, 312, 313, 411, 412 am Sortenvorwahlspeicher 15, 35, 45 gewählt. Der jeweilige Bediener 18, 38, 48 muss also entscheiden, ob ein Wechsel einer Sorte 111, 112, 311, 312, 313, 411, 412 oder das Nachfüllen oder ein Bedienereingriff/Rüstvorgang für eine Sorte 111, 112, 311, 312, 313, 411, 412 erfolgen muss. Das erste vorbestimmte optische Signal OS1 ist möglicherweise ein durchgehendes Leuchten oder Dauerlicht einer Meldeleuchte als optische Ausgabeeinrichtung 16, 36, 46.

Muss der Wechsel einer Sorte 111, 112, 311, 312, 313, 411, 412 oder das Nachfüllen oder ein Bedienereingriff/Rüstvorgang für eine Sorte 111, 112, 311, 312, 313, 411, 412 erfolgen, wird das zweite vorbestimmte optische Signal OS2 bei dem zuvor beschriebenen Schritt S3 ausgegeben. Das zweite vorbestimmte optische Signal OS2 signalisiert demzufolge während noch laufender Produktion und bereits anstehendem Wechsel der Produktion an der zugehörigen Behälterbehandlungsmaschine 10, 30, 40 (externes Rüsten), dass ein Wechsel einer Sorte 111, 112, 311, 312, 313, 411, 412 oder das Nachfüllen oder ein Bedienereingriff/Rüstvorgang für eine Sorte 111, 112, 311, 312, 313, 411, 412 bald vorzunehmen ist bzw. bald etwas zu tun ist. Das zweite vorbestimmte optische Signal OS2 ist möglicherweise realisiert durch ein Blinken einer Meldeleuchte als optische Ausgabeeinrichtung 16, 36, 46. Auch das Blinken kann mit fortschreitender Zeit schneller werden, wie zuvor in Bezug auf das erste Ausführungsbeispiel beschrieben. Bevorzugt erfolgt das Blinken mit einer Frequenz von z.B. 0,66 Hz., also langsamer als das Blinken für Störsignale.

Bei dem zuvor beschriebenen Schritt S5, bei welchem die Produktion an der zugehörigen Behälterbehandlungsmaschine 10, 30, 40 bereits beendet wurde und das Umrüsten bzw. Nachfüllen ausgeführt wird (internes Rüsten), gibt weiter das zweite vorbestimmte optische Signal OS2 an, dass die Umstellung bzw. das Umrüsten oder Nachfüllen noch läuft oder noch nicht bestätigt ist.

Das dritte vorbestimmte optische Signal OS3 zeigt an, dass derzeit keine Aufgabe ansteht. Hierfür kann die entsprechende Ausgabeeinrichtung 16, 36, 46 ausgeschaltet sein. Das dritte vorbestimmte optische Signal OS3 wird nur bei Stillstand der Behälterbehandlungsanlage 3 angezeigt.

Bei einer ersten Modifikation des vorliegenden Ausführungsbeispiels ist das zweite vorbestimmte optische Signal OS2 für die Schritte S3 und S5 nicht gleich sondern unterscheidet sich bei den Schritten S3, S5 durch die Art des Blinkens. Die Art des Blinkens kann insbesondere die Frequenz des Blinkens, wie schnell oder langsam, oder die Reihenfolge des Blinkens, erst ein langes Aufleuchten der entsprechenden Ausgabeeinrichtung(en) 16, 36, 46 gefolgt von einem kurzen Aufleuchten der entsprechenden Ausgabeeinrichtung(en) 16, 36, 46 usw. sein. Auch dadurch kann in dem zweiten optischen Signal OS2 ein weiterer Code enthalten sein, der die fortschreitende Zeit in Bezug auf den Wechsel einer Sorte 111, 112, 311, 312, 313, 411, 412 oder das Nachfüllen für eine Sorte 111, 112, 311, 312, 313, 411, 412 umfasst. Dies ist zuvor als zweite Modifikation des Verfahrens gemäß dem ersten Ausführungsbeispiel genauer beschrieben.

Bei einer zweiten Modifikation des vorliegenden Ausführungsbeispiels wird das dritte vorbestimmte optische Signal OS3, das beispielsweise kein Leuchten bzw. der Ausschaltzustand der entsprechenden Ausgabeeinrichtung 16, 36, 46 ist, anstelle des ersten vorbestimmten optischen Signals OS1 ausgegeben, das beispielsweise das Dauerleuchten der entsprechenden Ausgabeeinrichtung 16, 36, 46 ist.

Auch auf diese Weise kann die Behandlung der Behälterbehandlungsanlage 3 vorteilhaft gemäß der Auswahl an dem jeweiligen Sortenvorwahlspeicher 11, 31, 41 der Behälterbehandlungsmaschinen 10, 30, 40 vorgewählt werden.

Auch die jeweiligen optischen Signale OS, OS2, OS3 wirken also über die jeweilige Behälterbehandlungsmaschine 10, 20, 30, 40 hinaus bzw. signalisieren die geplanten Zustände auch für andere, nachfolgende Behälterbehandlungsmaschinen 10, 20, 30, 40. Je nach Konstellation der Anlage 1, wie beteiligte Maschinen 10, 20, 30, 40, räumliche Trennung der Maschinen 10, 20, 30, 40 oder der Art der Maschine 10, 20, 30, 40, können alle vorbestimmten optischen Signale OS, OS2, OS3 oder auch nur ein Teil der vorbestimmten optischen Signale OS, OS2, OS3 oder auch nur teilweise an den Behälterbehandlungsmaschine 10, 20, 30, 40 ausgegeben werden. Dies kann erfolgen, wie zuvor bei dem ersten Ausführungsbeispiel für die vorbestimmten Audiosignale TS, TS2, TS3 beschrieben.

Werden in einem Bereich der Anlage 1- z.B. einem Block- zwei Bediener 18 für eine Umstellung eingesetzt (um Zeit zu sparen), kann z.B. der eine der Bediener 18 sofort erkennen, ob ein Teilbereich bereits vom anderen Bediener 18 umgestellt wurde. Dies ist beispielsweise erkennbar, weil dort das optische Signal nicht mehr blinkt.

Alle zuvor beschriebenen Ausgestaltungen der Behälterbehandlungsanlagen 1, 2, 3, der Behälterbehandlungsmaschinen 10, 20, 30, 40, der Transporteinrichtungen 50, 55 der Steuereinrichtung 60 und des zuvor beschriebenen Transportverfahrens können einzeln oder in allen möglichen Kombinationen Verwendung finden. Die Merkmale des ersten bis dritten Ausführungsbeispiels und/oder deren Modifikationen sind beliebig miteinander kombinierbar. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Behälterbehandlungsanlage 1 bis 3 des ersten oder zweiten oder dritten Ausführungsbeispiels kann auch zur Behandlung von Glasflaschen oder Dosen Verwendung finden.

Auch die Behälterbehandlungsanlagen 1, 2 des ersten oder zweiten Ausführungsbeispiels können eine Einweganlage sein.

Zudem kann beispielsweise die erste Behälterbehandlungsmaschine 10 eine Blasmaschineneinheit, eine Füllmaschineneinheit, eine Etikettiermaschineneinheit, usw. direkt in einer Reihe hintereinander angeordnet haben, so dass die Behälter 5 jeweils von der vorhergehenden Maschineneinheit zur folgenden Maschineneinheit mittels einer nicht dargestellten Transporteinrichtung transportiert werden können.

Die Anzahl der Behälterbehandlungsmaschinen 10, 20, 30, 40 der Behälterbehandlungsanlagen 1, 2, 3 ist beliebig wählbar.

Es ist auch möglich, dass die Ausgabeeinrichtungen 15, 16 als eine Einheit oder ein Bauteil ausgeführt sind. Außerdem können die Ausgabeeinrichtungen 35, 36 als eine Einheit oder ein Bauteil ausgeführt sein. Noch dazu können die Ausgabeeinrichtungen 45, 46 als eine Einheit oder ein Bauteil ausgeführt sein. In diesen Fällen können die Ausgabeeinrichtungen 15, 35, 45, 16, 36, 46 sowohl zumindest eines der Audiosignale TS1, TS2, TS3 und zumindest eines der optischen Signale OS1, OS2, OS3 ausgeben.

### Bezugszeichenliste

- 1, 2, 3: Behälterbehandlungsanlage
- 5: Behälter
- 6: Etikett
- 10, 20, 30, 40: Behälterbehandlungsmaschine
- 11, 31, 41: Sortenvorwahlspeicher
- 15, 35, 45: Ausgabeeinrichtung
- 16, 36, 46: optische Ausgabeeinrichtung
- 18,38,48: Bediener
- 50, 55: Transporteinrichtung
- 60: Steuereinrichtung
- 70: Erfassungseinrichtung
- 80: Pfeil für Ausgaberichtung
- 111,112: Sorte
- 311,312,313: Sorte
- 411,412: Sorte
- S1 bis S8: Verfahrensschritte
- TS1: erstes vorbestimmtes Audiosignal
- TS2: zweites vorbestimmtes Audiosignal
- TS3: drittes vorbestimmtes Audiosignal
- OS1: erstes vorbestimmtes optisches Signal
- OS2: zweites vorbestimmtes optisches Signal
- OS3: drittes vorbestimmtes optisches Signal
- WS: viertes vorbestimmtes Audiosignal

## Patentansprüche

1. Behälterbehandlungsanlage (1; 2; 3), mit
mindestens einer Behälterbehandlungsmaschine (10, 20, 30, 40) zum Behandeln von Behältern (5), wobei mindestens eine Behälterbehandlungsmaschine (10, 30, 40) einen Sortenvorwahlspeicher (11, 31, 41) aufweist, bei welchem verschiedene Sorten (111, 112; 311, 312, 313; 411, 412) für eine von der Behälterbehandlungsmaschine (10, 30, 40) durchzuführende Behandlung vorwählbar sind,
mindestens einer Ausgabeeinrichtung (15, 35, 45; 16, 36, 46), die an der mindestens einen Behälterbehandlungsmaschine (10, 30, 40) angeordnet ist, zur Ausgabe eines Audiosignals (TS1, TS2, TS3) und/oder eines optischen Signals (OS1, OS2, OS3), und
einer Steuereinrichtung (60), **dadurch gekennzeichnet, dass** die Steuereinrichtung (60) zur Steuerung der mindestens einen Ausgabeeinrichtung (15, 35, 45; 16, 36, 46) derart ausgestaltet ist, dass die Ausgabeeinrichtung ein vorbestimmtes Audiosignal (TS1, TS2, TS3) aus Tonfolgen mit mindestens zwei unterschiedlichen Tönen akustisch und/oder ein optisches Signal (OS1, OS2, OS3) optisch ausgibt, wenn an der Behälterbehandlungsmaschine (10, 20, 30, 40) aufgrund der im Sortenvorwahlspeicher (11, 31, 41) vorgewählten Sorte (111, 112; 311, 312, 313; 411, 412) ein Wechsel einer Sorte (111, 112; 311, 312, 313; 411, 412) oder ein Nachfüllen für die vorgewählte Sorte (111, 112; 311, 312, 313; 411, 412) nach Ablauf einer vorbestimmten Zeitdauer in der Zukunft bevorsteht.

2. Behälterbehandlungsanlage (1; 2; 3) nach Anspruch 1,
wobei das vorbestimmte Audiosignal (TS1, TS2, TS3) eine Melodie ist, oder
wobei das vorbestimmte Audiosignal (TS1, TS2, TS3) eine Melodie ist, die mit einer Sprachsequenz kombiniert ist, und/oder
wobei das optische Signal (OS1, OS2, OS3) ein Dauerlicht oder ein Blinken oder ein Ausschalten der Ausgabeeinrichtung (15, 35, 45; 16, 36, 46) ist.

3. Behälterbehandlungsanlage (1; 2; 3) nach Anspruch 2, wobei die Sprachsequenz eine gesprochene Sprachsequenz ist.

4. Behälterbehandlungsanlage (1; 2; 3) nach einem der vorangehenden Ansprüche,
wobei das vorbestimmte Audiosignal (TS1, TS2, TS3) und/oder das optische Signal (OS1, OS2, OS3) für jeden geplanten Zustand eines Wechsels einer Sorte (111, 112; 311, 312, 313; 411, 412) oder ein Nachfüllen oder ein Bedienereingriff/Rüstvorgang für die vorgewählte Sorte (111, 112; 311, 312, 313; 411, 412) der Behälterbehandlungsanlage (1) verschieden sind/ist, und/oder
wobei die Ausgabeeinrichtung (15, 35, 45; 16, 36, 46) ausgestaltet ist, das vorbestimmte Audiosignal (TS1, TS2, TS3) und/oder das optische Signal (OS1, OS2, OS3) periodisch zu wiederholen, wobei die Ausgabe des vorbestimmten Audiosignals (TS1, TS2, TS3) und/oder des optischen Signals einen Code umfasst, der die fortschreitende Zeit in Bezug auf den Wechsel einer Sorte (111, 112; 311, 312, 313; 411, 412) oder ein Nachfüllen für die vorgewählte Sorte (111, 112; 311, 312, 313; 411, 412) umfasst.

5. Behälterbehandlungsanlage (1; 2) nach einem der vorangehenden Ansprüche,
wobei jeder Behälterbehandlungsmaschine (10, 30, 40), die einen Sortenvorwahlspeicher (11, 31, 41) aufweist, eine Ausgabeeinrichtung (15, 35, 45; 16, 36, 46) zugeordnet ist, und
wobei die Ausgabeeinrichtung (15, 35, 45; 16, 36, 46) einer Behälterbehandlungsmaschine (10, 30, 40) unabhängig von einer Ausgabeeinrichtung (15, 35, 45) einer weiteren Behälterbehandlungsmaschine (10, 30, 40) betreibbar ist.

6. Behälterbehandlungsanlage (1; 2; 3) nach Anspruch 5,
wobei die Behälterbehandlungsanlage (1; 2; 3) eine erste Behälterbehandlungsmaschine (10) und eine weitere Behälterbehandlungsmaschine (30) aufweist, die in Transportrichtung der Behälter (5) der ersten Behälterbehandlungsmaschine (10) nachgeschaltet ist, und
wobei die Steuereinrichtung (60) zur Steuerung einer Ausgabeeinrichtung (35), die an der weiteren Behälterbehandlungsmaschine (30) angeordnet ist, derart ausgestaltet ist, dass die Ausgabeeinrichtung (35) das vorbestimmte Audiosignal (TS1) und/oder das optische Signal (OS2) ausgibt, wenn an der ersten Behälterbehandlungsmaschine (10) aufgrund der im Sortenvorwahlspeicher (11,) vorgewählten Sorte (111, 112) ein Wechsel der Sorte (111, 112) oder ein Nachfüllen für die vorgewählte Sorte (111, 112) in der Zukunft nach Ablauf einer vorbestimmten Zeitdauer bevorsteht.

7. Behälterbehandlungsanlage (1; 2) nach einem der vorangehenden Ansprüche,
zudem mit einer Erfassungseinrichtung (70), die zur Erfassung mindestens eines Ist-Zustands einer Betriebsgröße beim Betrieb der mindestens einen Behälterbehandlungsmaschine (10, 20, 30, 40) ausgestaltet und angeordnet ist, wobei der Ist-Zustand der Betriebsgröße ein Maß für eine Zeitdauer oder eine noch abzufüllende Restmenge ist, nach deren Ablauf ein Start oder das Ende eines vorbestimmten Betriebs der mindestens einen Behälterbehandlungsmaschine (10, 20, 30, 40) bevorsteht,
wobei die Steuereinrichtung (60) zur Steuerung der mindestens einen Ausgabeeinrichtung (15, 35, 45; 16, 36, 46) derart ausgestaltet ist, dass die Ausgabeeinrichtung (15, 35, 45; 16, 36, 46) ein Audiosignal (TS1, TS2, TS3) aus Tonfolgen mit mindestens zwei unterschiedlichen Tönen und/oder das optische Signal (OS1, OS2, OS3) ausgibt, wenn die Erfassungseinrichtung (70) einen vorbestimmten Ist-Zustand des mindestens einen Ist-Zustands erfasst.

8. Behälterbehandlungsanlage (1; 2) nach Anspruch 7,
wobei der Start oder das Ende eines vorbestimmten Betriebs der mindestens einen Behälterbehandlungsmaschine (10, 30, 40) der Start oder das Ende der Produktion mit der Behälterbehandlungsanlage (1) ist, oder
wobei der Start oder das Ende eines vorbestimmten Betriebs der mindestens einen Behälterbehandlungsmaschine (10, 20, 30, 40) der Start oder das Ende einer Umstellung der mindestens einen Behälterbehandlungsmaschine (10, 30, 40) von der Produktion eines ersten Produkts auf ein zweites Produkt ist, oder
wobei der Start oder das Ende eines vorbestimmten Betriebs der mindestens einen Behälterbehandlungsmaschine (10, 20, 30, 40) der Start oder das Ende eines Reinigungsprozesses mit der mindestens einen Behälterbehandlungsmaschine (20) ist.

9. Behälterbehandlungsanlage (1; 2) nach einem der vorangehenden Ansprüche,
zudem mit einer Transporteinrichtung (50) zum Transport von Behältern (5) zu der mindestens einen Behälterbehandlungsmaschine (10, 20, 30, 40) oder weg von der mindestens einen Behälterbehandlungsmaschine (10, 20, 30, 40), und/oder
zudem mit einer Transporteinrichtung (50) zum Transport von Behältern (5) von einer ersten Behälterbehandlungsmaschine (10) zu einer dritten Behälterbehandlungsmaschine (30) unter Umgehung einer zweiten Behälterbehandlungsmaschine (20), die zwischen der ersten und dritten Behälterbehandlungsmaschine (10, 30) angeordnet ist, wenn eine für die Umgehung entsprechende Sorte (111, 112; 311, 312, 313; 411, 412) im Sortenvorwahlspeicher (11) der ersten Behälterbehandlungsmaschine (10) vorgewählt ist, und/oder
wobei die mindestens eine Behälterbehandlungsmaschine (10, 20, 30, 40) eine Blasmaschine und/oder eine Reinigungsmaschine und/oder eine Wärmebehandlungsmaschine und/oder eine Füllmaschine und/oder eine Ausstattungsmaschine und/oder eine Verpackungsmaschine und/oder eine Palettiermaschine aufweist.

10. Verfahren für eine Behälterbehandlungsanlage (1; 2; 3), die mindestens eine Behälterbehandlungsmaschine (10, 20, 30, 40) zum Behandeln von Behältern (5), mindestens eine Ausgabeeinrichtung (15, 35, 45; 16, 36, 46), die an der mindestens einen Behälterbehandlungsmaschine (10, 30, 40) angeordnet ist, und eine Steuereinrichtung (60) aufweist, wobei die mindestens eine Behälterbehandlungsmaschine (10, 30, 40) einen Sortenvorwahlspeicher (11, 31, 41) aufweist, bei welchem verschiedene Sorten für eine von der Behälterbehandlungsmaschine (10, 20, 30, 40) durchzuführende Behandlung vorwählbar sind, und wobei das Verfahren die Schritte aufweist
Durchführen einer Behandlung von Behältern (5) mit der mindestens einen Behälterbehandlungsmaschine (10, 20, 30, 40), bei der aus verschiedenen Sorten (111, 112; 311, 312, 313; 411, 412) des Sortenvorwahlspeichers (11, 31, 41) für eine von der Behälterbehandlungsmaschine (10, 20, 30, 40) durchzuführende Behandlung eine Sorte (111, 112; 311, 312, 313; 411, 412) vorgewählt ist,
Steuern, mit einer Steuereinrichtung (60), der mindestens einen Ausgabeeinrichtung (15, 35, 45; 16, 36, 46) derart, dass die Ausgabeeinrichtung (15, 35, 45; 16, 36, 46) ein vorbestimmtes Audiosignal (TS1, TS2, TS3) aus Tonfolgen mit mindestens zwei unterschiedlichen Tönen und/oder ein optisches Signal (OS1, OS2, OS3) optisch ausgibt, wenn an der Behälterbehandlungsmaschine (10, 20, 30, 40) aufgrund der im Sortenvorwahlspeicher (11, 31, 41) vorgewählten Sorte (111, 112; 311, 312, 313; 411, 412) ein Wechsel einer Sorte (111, 112; 311, 312, 313; 411, 412) oder ein Nachfüllen für die vorgewählte Sorte (111, 112; 311, 312, 313; 411, 412) nach Ablauf einer vorbestimmten Zeitdauer in der Zukunft bevorsteht, und
akustisches Ausgeben, mit mindestens einer Ausgabeeinrichtung (15, 35, 45; 16, 36, 46), des vorbestimmten Audiosignals (TS1, TS2, TS3) und/oder optisches Ausgeben, mit mindestens einer Ausgabeeinrichtung (16, 36, 46), eines optischen Signals (OS1, OS2, OS3).

## Claims

1. A container handling plant (1; 2; 3), comprising
at least one container handling machine (10, 20, 30, 40) for handling containers (5), wherein at least one container handling machine (10, 30, 40) comprises a type preselection memory (11, 31, 41) in which different types (111, 112; 311, 312 313; 411, 412) are preselectable for a handling to be performed by the container handling machine (10, 30, 40),
at least one output device (15, 35, 45; 16, 36, 46) positioned at the at least one container handling machine (10, 30, 40) for outputting an audio signal (TS1, TS2, TS3) and / or an optical signal (OS1, OS2, OS3), and
a control device (60) **characterized in that** the control device (60) is configured to control the at least one output device (15, 35, 45;16, 36, 46) such that the output device acoustically outputs a predetermined audio signal (TS1, TS2, TS3) made of tone sequences comprising at least two different tones and / or optically outputs an optical signal (OS1, OS2, OS 3), if due to the type (111, 112; 311, 312, 313; 411, 412) preselected in the type preselection memory (11, 31, 41) a change of a type (111, 112; 311, 312, 313; 411, 412) or a refill for the preselected type (111, 112; 311, 312, 313; 411, 412) is scheduled at the container handling machine (10, 20, 30, 40) in the future at the end of a predetermined time period.

2. The container handling plant (1; 2; 3) according to claim 1,
wherein said predetermined audio signal (TS1, TS2, TS3) is a melody, or
wherein said predetermined audio signal (TS1, TS2, TS3) is a melody combined with a speech sequence, and / or
wherein the optical signal (OS1, OS2, OS3) is a constant light or a flashing or turning off of the output device (15, 35, 45, 16, 36, 46).

3. The container handling plant (1; 2; 3) according to claim 2, wherein the speech sequence is a spoken speech sequence.

4. The container handling plant (1; 2; 3) according to any one of the preceding claims,
wherein the predetermined audio signal (TS1, TS2, TS3) and / or the optical signal (OS1, OS2, OS3) are / is different for each planned state of a change of a type (111, 112; 311, 312, 313; 411, 412) or a refill or an operator intervention / setup operation for the preselected type (111, 112; 311, 312, 313; 411, 412) of the container handling plant (1), and / or
wherein the output device (15, 35, 45; 16, 36, 46) is configured to periodically repeat the predetermined audio signal (TS1, TS2, TS3) and / or the optical signal (OS1, OS2, OS3), wherein the output of the predetermined audio signal (TS1, TS2, TS3) and / or the optical signal comprise/s a code comprising the progressing time with respect to the change of a type (111, 112; 311, 312, 313; 411, 412) or a refill for the preselected type (111, 112; 311, 312, 313; 411, 412).

5. The container handling plant (1; 2) according to any one of the preceding claims,
wherein an output device (15, 35, 45; 16, 36, 46) is allocated to each container handling machine (10, 30, 40) having a type preselection memory (11, 31, 41), and
wherein the output device (15, 35, 45; 16, 36, 46) of a container handling machine (10, 30, 40) is operable independent of an output device (15, 35, 45) of another container handling machine (10, 30, 40).

6. The container handling plant (1; 2; 3) according to claim 5,
wherein the container handling plant (1; 2; 3) comprises a first container handling machine (10) and another container handling machine (30) positioned downstream of the first container handling machine (10) in the conveying direction of the containers (5), and
wherein the control device (60) is configured to control an output device (35) positioned at the another container handling machine (30) such that the output device (35) outputs the predetermined audio signal (TS1) and / or the optical signal (OS2) when, due to the type (111, 112) preselected in the type preselection memory (11), a change of the type (111, 112) or a refill of the preselected type (111, 112) on the first container handling machine (10) is scheduled in the future at the end of a predetermined time period.

7. The container handling plant (1; 2) according to any one of the preceding claims,
further comprising a detecting device (70) configured and positioned to detect at least one actual state of an operating variable in operation of the at least one container handling machine (10, 20, 30, 40), wherein the actual state of the operating variable is a measure for a time period or a residual amount still to be filled, at the end of which time period is scheduled a start or the end of a predetermined operation of the at least one container handling machine (10, 20, 30, 40),
wherein the control device (60) is configured to control the at least one output device (15, 35, 45; 16, 36, 46) such that the output device (15, 35, 45; 16, 36, 46) outputs an audio signal (TS1, TS2, TS3) from tone sequences comprising at least two different tones and / or the optical signal (OS1, OS2, OS3), when the detecting device (70) detects a predetermined actual state of the at least one actual state.

8. The container handling plant (1; 2) according to claim 7,
wherein the start or the end of a predetermined operation of the at least one container handling machine (10, 30, 40) is the start or the end of the production with the container handling plant (1), or
wherein the start or the end of a predetermined operation of the at least one container handling machine (10, 20, 30, 40) is the start or the end of a conversion of the at least one container handling machine (10, 30, 40) from the production of a first product to a second product, or
wherein the start or the end of a predetermined operation of the at least one container handling machine (10, 20, 30, 40) is the start or the end of a cleaning process performed with the at least one container handling machine (20).

9. The container handling plant (1; 2) according to any one of the preceding claims,
further comprising a conveying device (50) for conveying containers (5) to the at least one container handling machine (10, 20, 30, 40) or away from the at least one container handling machine (10, 20, 30, 40), and / or
further comprising a conveying device (50) for conveying containers (5) from a first container handling machine (10) to a third container handling machine (30) bypassing a second container handling machine (20) which is positioned between the first and third container handling machines (10, 30), if a type (111, 112; 311, 312, 313; 411, 412) associated to bypassing is preselected in the type preselection memory (11) of the first container handling machine (10), and / or
wherein the at least one container handling machine (10, 20, 30, 40) comprises a blow molding machine and / or a cleaning machine and / or a heat treatment machine and / or a filling machine and / or an equipment machine and / or a packaging machine and / or a palletizing machine.

10. A method for a container handling plant (1; 2; 3) comprising at least one container handling machine (10, 20, 30, 40) for handling containers (5), at least one output device (15, 35, 45; 16, 36, 46) positioned at the at least one container handling machine (10, 30, 40), and a control device (60), wherein the at least one container handling machine (10, 30, 40) comprises a type preselection memory (11, 31, 41) in which different types are preselectable for a handling to be performed by the container handling machine (10, 30, 40), and wherein the method comprises the steps of
performing a handling of containers (5) with the at least one container handling machine (10, 20, 30, 40), in which a type (111, 112; 311, 312, 313; 411, 412) is preselected out of different types (111, 112; 311, 312, 313; 411, 412) of the type preselection memory (11, 31, 41) and for which a handling is to be performed by the container handling machine (10, 30, 40),
controlling, by a control device (60), the at least one output device (15, 35, 45; 16, 36, 46) such that the output device (15, 35, 45; 16, 36, 46) outputs a predetermined audio signal (TS1, TS2, TS3) made of tone sequences comprising at least two different tones and / or optically outputs an optical signal (OS1, OS2, OS 3), if due to the type (111, 112; 311, 312, 313; 411, 412) preselected in the type preselection memory (11, 31, 41) a change of a type (111, 112; 311, 312, 313; 411, 412) or a refill for the preselected type (111, 112; 311, 312, 313; 411, 412) is scheduled at the container handling machine (10, 20, 30, 40) in the future at the end of a predetermined time period, and
acoustically outputting, by at least one output device (15, 35, 45; 16, 36, 46), the predetermined audio signal (TS1, TS2, TS3) and / or optically outputting, by at least one output device (16, 36, 46), an optical signal (OS1, OS2, OS3).

## Revendications

1. Installation de traitement de récipients (1; 2; 3), comprenant
au moins une machine de traitement de récipients (10, 20, 30, 40) pour traiter des récipients (5), où au moins une machine de traitement de récipients (10, 30, 40) comprend une mémoire de présélection de type (11, 31, 41) dans laquelle différents types (111, 112; 311, 312 313; 411, 412) sont présélectionnables pour un traitement à effectuer par la machine de traitement de récipients (10, 30, 40),
au moins un dispositif d'émission (15, 35, 45; 16, 36, 46) positionné au niveau de la au moins une machine de traitement de récipients (10, 30, 40) pour émettre un signal audio (TS1, TS2, TS3) et/ou un signal optique (OS1, OS2, OS3), et
un dispositif de commande (60) **caractérisée en ce que** le dispositif de commande (60) est configuré pour commander le au moins un dispositif d'émission (15, 35, 45; 16, 36, 46) de telle sorte que le dispositif d'émission émet acoustiquement un signal audio (TS1, TS2, TS3) prédéterminé composé de séquences de tonalités comprenant au moins deux tonalités différentes et/ou émet optiquement un signal optique (OS1, OS2, OS3) si, du fait du type (111, 112; 311, 312, 313; 411, 412) présélectionné dans la mémoire de présélection de type (11, 31, 41) un changement d'un type (111, 112; 311, 312, 313; 411, 412) ou un rechargement pour le type (111, 112; 311, 312, 313; 411, 412) présélectionné est programmé au niveau de la machine de traitement de récipients (10, 20, 30, 40) dans le futur à la fin d'une période de temps prédéterminée.

2. Installation de traitement de récipients (1; 2; 3) selon la revendication 1,
où ledit signal audio (TS1, TS2, TS3) prédéterminé est une mélodie,
ou bien où ledit signal audio (TS1, TS2, TS3) prédéterminé est une mélodie combinée avec une séquence vocale, et/ou
où le signal optique (OS1, OS2, OS3) est une lumière constante ou un clignotement ou une mise hors service du dispositif d'émission (15, 35, 45; 16, 36, 46).

3. Installation de traitement de récipients (1; 2; 3) selon la revendication 2, où la séquence vocale est une séquence vocale parlée.

4. Installation de traitement de récipients (1; 2; 3) selon l'une quelconque des revendications précédentes,
où le signal audio (TS1, TS2, TS3) prédéterminé et/ou le signal optique (OS1, OS2, OS3) sont/est différent pour chaque état prévu d'un changement d'un type (111, 112; 311, 312, 313; 411, 412) ou d'un rechargement ou d'une intervention d'opérateur/opération de mise en service pour le type (111, 112; 311, 312, 313; 411, 412) présélectionné de l'installation de traitement de récipients (1), et/ou
où le dispositif d'émission (15, 35, 45; 16, 36, 46) est configuré pour répéter périodiquement le signal audio (TS1, TS2, TS3) prédéterminé et/ou le signal optique (OS1, OS2, OS3), où l'émission du signal audio (TS1, TS2, TS3) prédéterminé et/ou du signal optique comprend/comprennent un code comprenant le temps de progression par rapport au changement d'un type (111, 112; 311, 312, 313; 411, 412) ou un rechargement pour le type (111, 112; 311, 312, 313; 411, 412) présélectionné.

5. Installation de traitement de récipients (1; 2) selon l'une quelconque des revendications précédentes,
où un dispositif d'émission (15, 35, 45; 16, 36, 46) est affecté à chaque machine de traitement de récipients (10, 30, 40) ayant une mémoire de présélection de type (11, 31, 41), et
où le dispositif d'émission (15, 35, 45; 16, 36, 46) d'une machine de traitement de récipients (10, 30, 40) peut être amené à fonctionner indépendamment d'un dispositif d'émission (15, 35, 45) d'une autre machine de traitement de récipients (10, 30, 40).

6. Installation de traitement de récipients (1; 2; 3) selon la revendication 5,
où l'installation de traitement de récipients (1; 2; 3) comprend une première machine de traitement de récipients (10) et une autre machine de traitement de récipients (30) positionnée en aval de la première machine de traitement de récipients (10) dans la direction de transport des récipients (5), et
où le dispositif de commande (60) est configuré pour commander un dispositif d'émission (35) positionné au niveau de l'autre machine de traitement de récipients (30) de sorte que le dispositif d'émission (35) émet le signal audio (TS1) prédéterminé et/ou le signal optique (OS2) lorsque, du fait du type (111, 112) présélectionné dans la mémoire de présélection de type (11), un changement du type (111, 112) ou un rechargement du type (111, 112) présélectionné sur la première machine de traitement de récipients (10) est programmé dans le futur à la fin d'une période de temps prédéterminée.

7. Installation de traitement de récipients (1; 2) selon l'une quelconque des revendications précédentes,
comprenant en outre un dispositif de détection (70) configuré et positionné pour détecter au moins un état réel d'une variable de fonctionnement lors du fonctionnement de la au moins une machine de traitement de récipients (10, 20, 30, 40), où l'état réel de la variable de fonctionnement est une mesure pour une période de temps ou une quantité résiduelle restant à remplir, période de temps à la fin de laquelle est programmé un début ou la fin d'un fonctionnement prédéterminé de la au moins une machine de traitement de récipients (10, 20, 30, 40),
où le dispositif de commande (60) est configuré pour commander le au moins un dispositif d'émission (15, 35, 45; 16, 36, 46) de telle sorte que le dispositif d'émission (15, 35, 45; 16, 36, 46) émet un signal audio (TS1, TS2, TS3) à partir de séquences de tonalités comprenant au moins deux tonalités différentes et/ou le signal optique (OS1, OS2, OS3), lorsque le dispositif de détection (70) détecte un état réel prédéterminé du au moins un état réel.

8. Installation de traitement de récipients (1; 2) selon la revendication 7,
où le début ou la fin d'un fonctionnement prédéterminé de la au moins une machine de traitement de récipients (10, 30, 40) est le début ou la fin de la production avec l'installation de traitement de récipients (1), ou
où le début ou la fin d'un fonctionnement prédéterminé de la au moins une machine de traitement de récipients (10, 20, 30, 40) est le début ou la fin d'une conversion de la au moins une machine de traitement de récipients (10, 30, 40) de la production d'un premier produit à un second produit, ou
où le début ou la fin d'un fonctionnement prédéterminé de la au moins une machine de traitement de récipients (10, 20, 30, 40) est le début ou la fin d'un processus de nettoyage effectué avec la au moins une machine de traitement de récipients (20).

9. Installation de traitement de récipients (1; 2) selon l'une quelconque des revendications précédentes,
comprenant en outre un dispositif de transport (50) pour transporter des récipients (5) vers la au moins une machine de traitement de récipients (10, 20, 30, 40) ou à distance de la au moins une machine de traitement de récipients (10, 20, 30, 40), et/ou
comprenant en outre un dispositif de transport (50) pour transporter des récipients (5) d'une première machine de traitement de récipients (10) à une troisième machine de traitement de récipients (30) en contournant une seconde machine de traitement de récipients (20) qui est positionnée entre les première et troisième machines de traitement de récipients (10, 30), si un type (111, 112; 311, 312, 313; 411, 412) associé au contournement est présélectionné dans la mémoire de présélection de type (11) de la première machine de traitement de récipients (10), et/ou
où la au moins une machine de traitement de récipients (10, 20, 30, 40) comprend une machine de moulage par soufflage et/ou une machine de nettoyage et/ou une machine de traitement thermique et/ou une machine de remplissage et/ou une machine d'équipement et/ou une machine d'emballage et/ou une machine de palettisation.

10. Procédé pour une installation de traitement de récipients (1; 2; 3) comprenant au moins une machine de traitement de récipients (10, 20, 30, 40) pour traiter des récipients (5), au moins un dispositif d'émission (15, 35, 45; 16, 36, 46) positionné au niveau de la au moins une machine de traitement de récipients (10, 30, 40), et un dispositif de commande (60), où la au moins une machine de traitement de récipients (10, 30, 40) comprend une mémoire de présélection de type (11, 31, 41) dans laquelle différents types pour un traitement sont présélectionnables, qui doivent être effectués par la machine de traitement de récipients (10, 20, 30, 40), et où le procédé comprend les étapes de
effectuer un traitement de récipients (5) avec la au moins une machine de traitement de récipients (10, 20, 30, 40), où un type (111, 112; 311, 312, 313; 411, 412) est présélectionné parmi différents types (111, 112; 311, 312, 313; 411, 412) de la mémoire de présélection de type (11, 31, 41) et pour lequel un traitement doit être effectué par la machine de traitement de récipients (10, 30, 40),
commander, par un dispositif de commande (60), le au moins un dispositif d'émission (15, 35, 45; 16, 36, 46) de telle sorte que le dispositif d'émission (15, 35, 45; 16, 36, 46) émet un signal audio (TS1, TS2, TS3) prédéterminé constitué de séquences de tonalités comprenant au moins deux tonalités différentes et/ou émet optiquement un signal optique (OS1, OS2, OS3), si, du fait du type (111, 112; 311, 312, 313; 411, 412) présélectionné dans la mémoire de présélection de type (11, 31, 41) un changement d'un type (111, 112; 311, 312, 313; 411, 412) ou un rechargement pour le type (111, 112; 311, 312, 313; 411, 412) présélectionné est programmé au niveau de la machine de traitement de récipients (10, 20, 30, 40) dans le future à la fin d'une période de temps prédéterminée, et
émettre acoustiquement, par au moins un dispositif d'émission (15, 35, 45; 16, 36, 46), le signal audio (TS1, TS2, TS3) prédéterminé et/ou émettre optiquement, par au moins un dispositif d'émission (16, 36, 46), un signal optique (OS1, OS2, OS3).
